# EUROPEAN PATENT APPLICATION

(11) **EP 1 503 540 A1**
(43) Date of publication of application: **02.02.2005**
(21) Application number: 04016666.2
(22) Date of filing: 15.07.2004
(51) Int. Cl.: H04L 12/24, H04L 12/26, H04Q 11/00

(54) **Network element with autodiscovery of link connections**

(30) Priority: 30.07.2003 US 630057
(71) Applicant: ALCATEL, 75008 Paris (FR)
(72) Inventor: Hanavan, Michael, 75088 Rowlett (US); Gardner, Stephen M., 75023 Plano (US)
(74) Representative: Dreiss, Fuhlendorf, Steimle & Becker

(57) **Abstract**

A sub-network of network elements (12) is connected to a network (14), such as an STS-1 network. Connection paths through the network (12) are not known. Each network element (12) sends out information particularly identifying an endpoint on each its channels. This endpoint information is received at other network elements (12) which record the information relative to their own endpoint identifiers. The endpoint identifiers for each connection path are stored in a central table.

## Description

### Background of the Invention

### 1. TECHNICAL FIELD

This invention relates in general to networking and, more particularly, to interfaces between networks.

### 2. DESCRIPTION OF THE RELATED ART

Businesses often use T1 or T3 connections to communicate between sites. In the past, the provisioning of such a connection between two sites has been a time-consuming, tedious process, especially if the sites are a long distance apart.

A high speed network, such as an STS-1 network, can be used to provide connectivity between a sub-network of network elements. This sub-network can then provide lower speed connections such as VT1.5 (T1) and DS-3 (T3) between two points serviced by the network elements. Connections through the sub-network can be provisioned much more easily; however, a problem exists where the STS-1 network is not designed to provide information on the STS-1 network to the sub-network. In particular, information on the link connections through the STS-1 network are not directly available to the sub-network. Accordingly, paths through the STS-1 network must be calculated by the sub-network, which is a difficult task.

Accordingly, a need has arisen for a method and apparatus for discovering link connections through a high-speed network.

### Brief Summary of the Invention

In the present invention, a database of connection endpoints between network elements in a subnetwork, where the network elements are connected through a high speed network, is generated by transmitting source endpoint identifiers on outgoing channels of some or all of the network elements. The network elements receive source endpoint identifiers from other network elements on incoming channels and associate the source endpoint identifiers with destination endpoint identifiers. A database is generated responsive to receiving the associated source and destination endpoint identifiers.

### Brief Description of the Several Views of the Drawings

For a more complete understanding of the present invention, and the advantages thereof, reference is now made to the following descriptions taken in conjunction with the accompanying drawings, in which:
Figure 1 illustrates a block diagram of a general network architecture, wherein network elements of a sub-network are coupled through a high speed server network;
Figure 2 illustrates paths through the high speed server network in greater detail;
Figure 3 illustrates a flowchart describing a generation of a database of connections between network elements;
Figure 4 illustrates a table associating network TIDs with corresponding numeric network element IDs (NE_IDs);
Figure 5 illustrates a centralized connection path table.

### Detailed Description of the Invention

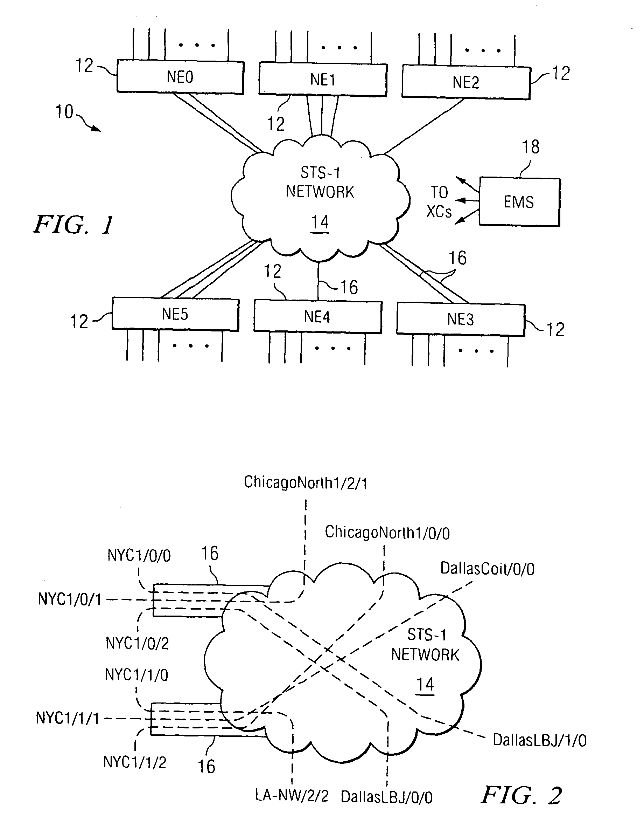

The present invention is best understood in relation to Figures 1 - 5 of the drawings, like numerals being used for like elements of the various drawings.

Figure 1 illustrates a block diagram of a general network architecture 10, wherein network elements 12 are coupled through a high speed server network 15, shown as an STS-1 network, over optical fibers 16. In the illustrated embodiment, the network elements 12 provide VT1.5, DS-1 and DS-3 connectivity to the STS-1 network 14. A central EMS (Element Management System) 18 controls the network elements 12.

Typically, the STS-1 network 14 is an existing network of high speed connections under control of the network owner and the network elements 12 are used to interface the high speed connections with lower speed connections used to provide services to the network owner's customers. The STS-1 server network 14 is opaque to the client sub-network, because network 14 is managed independently of the client sub-network.

In general, it is important to the network owner that the network elements 12 can be added to the existing network 14 as seamlessly as possible. In particular, the present invention determines the paths through the STS-1 network 14 without involvement of the STS-1 network 14 itself.

Figure 2 illustrates paths through the STS-1 network 14 in greater detail. In Figure 2, two optical fibers from a network element 12 are shown. Each network element is assigned a network ID (TL/1 TID), such as "NYC1" or "ChicagoNorth1". Each network element 12 can have one or more incoming optical fibers 16 and one or more corresponding outgoing fibers 16. For simplicity, only the outgoing fibers for NYC1 are shown in Figure 2.

In this illustration, each fiber uses OC-3 time multiplexing, i.e., the digital signal transmitted over the optical fiber 16 is divided into three time slots per frame, where each time slot (or "payload" slot) can be considered as a separate STS-1 channel between two network elements 12. As can be seen in Figure 2, each slot of each optical fiber may be independently directed to a different network element 12. IN Figure 2, each time slot is designated by three criteria: (1) network element TID, (2) interface number (fiber number) and (3) time slot. For example, slot "0" of the fiber on interface "0" of the network element designated as "NYC1" is coupled to slot "0" of the fiber on interface "1" of the network element designated as "DallasLBJ". Slot "1" of the fiber on interface "0" of the network element designated as "NYC1" is coupled to slot "1" of the fiber on interface "2" of the network element designated as "ChicagoNorth1". Slot "2" of the fiber on interface "0" of the network element designated as "NYC1" is coupled to slot "0" of the fiber on interface "0" of the network element designated as "DallasLBJ".

While the illustrated embodiment is shown using OC-3 connections, any connections could be used, such as OC-12 (twelve time slots per frame), OC-48 (forty-eight time slots per frame) or OC-96 (ninety-six time slots per frame), in any combination.

The STS-1 network 14 is generally not designed to provide information to the network elements 12 regarding the paths through the network. In particular, the network elements 12 and EMS 18 may be made by a different vendor than the equipment used in the network 14 and have no communication capability with the network 14. Accordingly, in the present invention, the network elements 12 are designed to automatically discover the STS-1 connections through the network 14 without intervention of the network 14.

In the present invention, the each of the network elements 12 in the sub-network, under control of EMS 18, sends information over each of its outgoing STS-1 channels indicating the source STS-1. In the preferred embodiment, this information is sent using the path overhead (POH). The use of the path overhead bytes is preferable, since the STS-1 path overhead is terminated by the network elements 12. Thus, the network elements 12 are able to exchange information using the path overhead without disrupting the STS-1 network 14. Looking directly into the path overhead has the added advantage of providing a knowledge of network connectivity without any reference to the internal state of the STS-1 network. Thus, protection switches within the network 14 have no impact on discovery of end-to-end connectivity.

Within the path overhead, it is assumed that the J1 field of the path overhead (the path trace) is used to carry endpoint information. The J1 field is used because it is readily available in off-the-shelf framing chips, so it is easy to support with minimal hardware and software changes. The J1 field of a SONET frame is a 64-byte field.

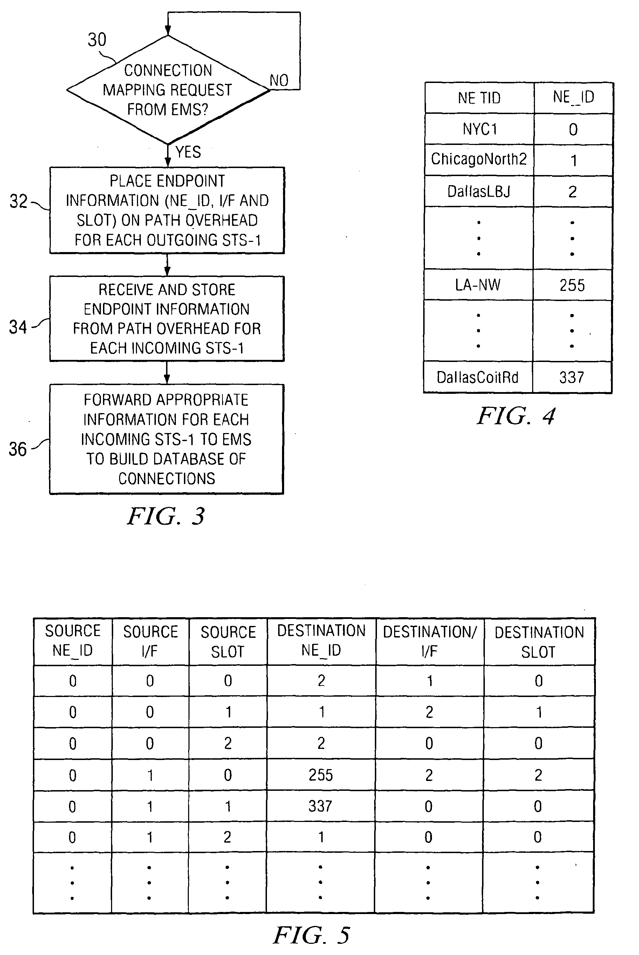

Figure 3 illustrates a flowchart describing generation of a database of connections between network elements 12. In decision block 30, a network element 12 awaits a request from the EMS 18 requesting a connection mapping. Upon a connection mapping request from the EMS 18, all network elements receiving the request will begin to place endpoint information into the path overhead for each of its outgoing STS-1 connections in step 32. Hence, for an OC-3 fiber, the network element 12 will place endpoint information in all three STS-1 channels (assuming that all three channels are being used) uniquely identifying the source of the information.

The endpoint information placed on the path overhead of each channel can be provided in any deterministic manner. For the illustrated embodiment, it is assumed that the endpoint of a connection can be defined by the network element ID, and interface (I/F) number indicative of the particular fiber, and a payload slot (i.e., a number indicative of the STS-1 channel for the fiber). Alternatively, each STS-1 channel for a network element 12 could be given an individual number *m,* between 0 and *M*-1, where M is the total number of STS-1 channels handled by the network element 12.

The network TID can be a long string, and since the J1 field is limited to sixty-four bytes (some of which may be needed to pass other control information), the network ID portion of the endpoint identification is preferably encoded, for example, through tables stored on the EMS 18. Figure 4 illustrates such a table, where each network TID has a corresponding numeric network element ID (NE_ID). Assuming that the path string can contain binary data, the information content of the NE_ID can be reduced in size to log₂(*N*) bits, where *N* is the number of network elements 12 in the sub-network.

If binary data is not allowed on the path overhead, hexadecimal encoding can be used (where each numeral is represented by a four-bit value). Assuming that there would be no more than 512 network elements 12 in a sub-network, and that there would be no more than 8192 STS-1 channels in a network element 12, then the total number of bytes needed to identify an endpoint, using hexadecimal encoding (each numeral represented by one byte), would be 3 (NE_ID) + 4 (STS-1) + 2 (checksum) = 9 bytes. These are all generous assumptions, and a real implementation is likely to require less bytes for endpoint identification. Even with a 9-byte field for endpoint identification, however, fifty-five bytes would remain in the J1 field for other network management uses.

Referring again to Figure 3, the network elements 12 also receive endpoint identification information on each incoming channel in step 34. This information is temporarily stored on the network element 12. Basically, each network element 12 maintains a table (or other information structure) of the received endpoint identification for each of its incoming STS-1 channels.

In step 36, the endpoint information received by each network element 12 is delivered to the EMS 18, typically upon command by the EMS. The EMS 18 uses this information to build a centralized connection path table, such as that shown in Figure 5. In Figure 5, it is assumed that each STS-1 channel is identified by NE_ID, interface number and payload slot.

For each received endpoint identifier, the network element need only send the near STS-1 identification (i.e., interface and payload slot on the near network element 12) and the STS-1 identification and NE_ID of the far network element 12. Given the assumption set forth above, the transfer should be no more than 4 (near STS-1 identification) + 3 (far NE_ID) + 4 (far STS-1 identification) = 11 bytes per equipped STS-1 per network element. The total amount of information sent to the EMS 18 can be reduced in half if only one network element at the end of each connection reports the endpoint identification to the EMS 18. For example, the network elements 12 could be programmed such that the endpoints of a connection are reported to the EMS only if the reporting network element has a higher (or lower) NE_ID than the network element 12 at the other end of the connection. Alternatively, each network element 12 could be programmed such that received connection endpoints are stored internally only if the NE_ID of the sending network element 12 is lower (or higher) than the receiving network element 12. In this case, all entries in the internally stored table would be sent to the EMS 18.

It is assumed that each network element 12 is able to detect an STS-1 brought into service on the network 14. A newly provisioned STS-1 should be detectable by observing the content of a SONET C2 byte changing from unequipped (0x00) to an equipped state (such as VT structured SPE: 0x02). A network element that observes a newly created link can transmit this information to the EMS 18 via an autonomous message. The EMS 18 can determine which network elements 12 are involved and request a connection mapping from these network elements.

The present invention provides significant advantages over the prior art. Even though a network is opaque from the viewpoint of a sub-network of network elements, the connections through the mapping can be automatically discovered without any communication with, or support from, the opaque network.

While the present invention has been described using the J1 field of a SONET frame to pass the endpoint identifiers, other fields could also be used. In different implementations, the endpoint identifiers could be passed on any overhead field which the network elements can write to and read from without danger of modification by the network 12 to provide reliable communications for the exchange of the encoded endpoint identity information. Further, while the invention has been discussed in connection with an STS-1 network 12, the invention could also be used to discover connection paths through other high speed networks employing different technologies, such as frequency division multiplexing.

The following features and combinations of features are further advantageous embodiments of the invention:
- A communication system, comprising a high speed network; a sub-network of network elements connected through the high speed network, said network elements including circuitry for: transmitting source endpoint identifiers on outgoing channels; receiving source endpoint identifiers from other network elements on incoming channels; and associating the source endpoint identifiers with destination endpoint identifiers; and a central control processor for maintaining a database responsive to receiving the associated source and destination endpoint identifiers.
- Network elements transmit associated source and destination endpoint identifiers to a central control processor.
- Each network element maintains a table associating received source endpoint identifiers to corresponding destination endpoint identifiers.
- A central control processor assigns a numeric identifier to each network element.
- Network elements transmit source endpoint identifiers including a numeric identifier of the network element transmitting a source endpoint identifier.
- Network elements transmit source endpoint identifiers on path overhead fields of outgoing channels of some or all of the network elements.

Although the Detailed Description of the invention has been directed to certain exemplary features and embodiments, various modifications of these features and embodiments, as well as alternative embodiments, will be suggested to those skilled in the art. The invention encompasses any modifications or alternative embodiments that fall within the scope of the Claims.

## Claims

1. A method of generating a database of connection endpoints between a sub-network of network elements, where the network elements are connected through a high speed network, comprising the steps of:
transmitting source endpoint identifiers on outgoing channels of some or all of the network elements;
on a particular network element, receiving source endpoint identifiers from other network elements on incoming channels and associating the source endpoint identifiers with destination endpoint identifiers; and
generating a database responsive to receiving the associated source and destination endpoint identifiers.

2. The method of claim 1 wherein the generating step comprises the step of transmitting associated source and destination endpoint identifiers to a central control processor.

3. The method of claim 2 wherein each network element maintains a table associating received source endpoint identifiers to corresponding destination endpoint identifiers.

4. The method of claim 1 and further comprising the step of assigning a numeric identifier to each network element.

5. The method of claim 4 wherein the transmitting step comprises the step of transmitting source endpoint identifiers including the numeric identifier of the network element transmitting the source endpoint identifier.

6. The method of claim 1 wherein said transmitting step comprises the step of transmitting source endpoint identifiers on path overhead fields of outgoing channels of some or all of the network elements.

7. A network element for connecting with other network elements through a server network, comprising:
circuitry for transmitting source endpoint identifiers on outgoing channels;
circuitry for receiving source endpoint identifiers from other network elements on incoming channels; and
circuitry for associating the source endpoint identifiers with destination endpoint identifiers.

8. The network element of claim 7 wherein said transmitting circuitry comprises circuitry for transmitting associated source and destination endpoint identifiers to the central control processor.

9. The network element of claim 8 wherein said associating circuitry comprises circuitry for maintaining a table associating received source endpoint identifiers to corresponding destination endpoint identifiers.

10. The network element of claim 7 wherein the transmitting circuitry comprises circuitry for transmitting a numeric identifier associated with the network element.

11. The network element of claim 7 wherein the transmitting circuitry comprises circuitry for transmitting source endpoint identifiers on path overhead fields of outgoing channels.
